# EUROPEAN PATENT APPLICATION

(11) **EP 1 281 314 A2**
(43) Date of publication of application: **05.02.2003**
(21) Application number: 02380167.3
(22) Date of filing: 25.07.2002
(51) Int. Cl.: A01G 9/24

(54) **Ventilation device for hothouse**

(30) Priority: 31.07.2001 ES 200101952
(71) Applicant: Angel Cano Martinez Espana, S.A., 30730 San Javier, Murcia (ES)
(72) Inventor: Morales Pérez, Jose Antonio, 30730 San Javier, Murcia (ES)
(74) Representative: Perez Bonal, Bernardo

(57) **Abstract**

Ventilation device that allows the opening of a half arch of a hot house roof in arch form, by means of a window hinged on one of its sides, being opened at the top part of the hot house. The union between the arch of the structure and the arches of the window is implemented in a coupling node where these structural elements converge. The seal between the window and the roof of the hot house is implemented in a watertight manner, since the window at its free end is slightly curved. The opening and closing are carried out by means of a rack joined at its upper end to the structure of the window, and which is driven by a gear arrangement propelled by a motor-reduction gear unit.

## Description

### OBJECT OF THE INVENTION

The present invention refers to a device consisting of a window with power-assisted opening for the ventilation of hot houses.

This device has a special configuration in the pronounced arc of the ends of the pieces that configure the window in order to reduce the stress to which it is subjected due to wind load.

It is characterized in a special configuration of raised pieces so that some assure the water-tightness of the ventilation window and others define the gradients in the ridge area.

### BACKGROUND OF THE INVENTION

Hot houses constitute structures with very demanding requirements given the function for which they are intended.

They have to be very light structures that do not require voluminous supports or columns, nor heavy roofs that occupy space and impede the passage of light to the interior.

On the inside, the span between supports has to be high to allow the maximum of free area to house the plants on its interior without columns or vertical supports that impede the maintenance work.

In turn, the structure has to allow temperature and humidity control that adapts quickly to weather conditions.

This control is achieved with enclosures based on plastic materials which while allowing the light to enter, avoid the loss of heat through radiation.

The supporting structure must also be able to bear conduits of diverse types, for example water under pressure for spraying from positions high up in order to increase environmental humidity, or others such as cables for the lighting.

And lastly, mention is made of the installation of ventilation systems that allow the air to be renewed and the temperature reduced when the radiation level is high.

These ventilation systems can be forced by means of ducts of large cross-section that run from an air pumping system, or by means of large openings that can be opened or closed at will.

Systems are known for opening large windows by power-assisted or manual means.

The Utility Model U96Q2247 describes a ventilation device for hot houses with a large zenithal window that incorporates a power-assisted elevation mechanism, with a rotating longitudinal shaft that produces a vertical displacement supported on an elbowed arm.

The Utility Model U9802929 describes a different device for ventilation based on the wrapping of plastic sheets on some triangular supports connected by means of longitudinal pieces.

As regards hot houses designed by means of vertical pieces that support roof arches with connections in "Y" formed by flanges, mention is made of the Utility Models U279337 and U8600262.

This last case makes use of windows hinged at the top and with bottom opening near the flanges in "Y" for connection to the supporting pieces.

The present invention describes a ventilation device based on a window opening at the top with great capacity for air renewal and a special configuration of its pieces to reduce the stresses supported for wind load as well as assuring total water-tightness after closing.

### DESCRIPTION OF THE INVENTION

The invention object of the present specification refers to a power-assisted ventilation device that allows the easy renewal of air inside a hot house.

To achieve a high level of air renewal without recurring to forced air ducts, it is necessary to have large openings preferably located in the roof.

These large openings are obtained with windows having high areas, which should be light and strong.

If the opening of these windows opposes the air current, the forces to be supported both by the hinged unions and the actuators that maintain the preset opening level are greater and they have to be over-dimensioned to stand such loads.

Over-dimensioning these elements requires increasing the weight on the roof, making use of bigger pieces in the support structure, incorporating actuators of larger dimensions and in brief making the total cost of construction more expensive.

The present invention modifies the configuration of the profile of the ventilation window to obtain a better behaviour from the aerodynamic point of view by reducing the forces normal to the roof due to the wind load.

The device consists mainly of such a window, hinged at its bottom part nearer to the roof support column, of means to assure the water-tightness, plus an actuator driven by a motor.

The main structure of the roof, which is not an objective of this invention, is formed by vertical pieces at the upper end of which a means of connection is located, of those that constitute a coupling node between the different bars that configure the roofing and the roof arches.

In particular, the roof arch is secured by a flange joined to the means of connection with the vertical support pieces.

This same flange secures by screwed connection, two pieces in "L" which act as hinged support for the ventilation window.

These pieces in "L" have their legs in opposition, are sufficiently separated to hold between them the window frame and are bent at a certain angle after the union with the flange to allow a certain distance of separation to be established between the two pieces arranged in parallel: the arch of the roof and the frame of the window.

It is at the end of these support pieces in "L" where the union is established that allows the hinging of the window.

Over this union and near the hinge axis, the slightly raised piece is found that maintains the plastic in tension that covers the window and that extends to another similar piece located on the other end of the window.

Near the other end of the hinged bar, that is, near the ridge, there is a negative dihedron that gives rise to a pronounced arc.

This negative dihedron results in a window with a curved surface of positive gradient over all its area save in a flat band parallel to the upper end where the gradient is negative.

This end band improves the aerodynamic behaviour of the window when it is closed since with a horizontal air current against the opening, this band of negative gradient presents a pressure distribution with a downward vertical resultant that favours the closing of the window.

Likewise, when the window is open, the resultant in the vertical direction tending to open the window excessively, is much smaller than that which would be obtained if this end band were not present.

This ventilation device likewise includes a raised piece below the arc defined by the negative dihedron of the window frame that serves to tension a plastic sheet fastened at a point beyond the end of the window.

This plastic sheet in tension serves as support of the window edge so that when the window rests on the plastic sheet, the latter always adapts to its edge obtaining total water-tightness.

Even in the case where a little rainwater manages to penetrate this seal, the plastic sheet presents a gradient that impedes the entrance of said water into the interior of the hot house.

It is by means of another raised piece that it is possible to define two slopes in the plastic stretched over the window, that of greater area toward the hinged bottom side and another toward the lower plastic sheet that assures the water-tightness of the seal and that descends toward the other side of the arch.

Under the window and joined to the roof arch is a motor with an actuator for opening the window.

This motor has a reduction gear that acts on a transmission rod that rotates and transmits the motor torque to a plurality of racks, each one of them joined to the bar of the structure of the window that corresponds to it.

A gear mechanism worked by the transmission rod serves for displacing each of the racks to open the window with a synchronized displacement.

### DESCRIPTION OF THE DRAWINGS

The present descriptive specification is completed with a set of drawings, which illustrate the preferred embodiment of the invention in a non-restrictive manner.

Figure 1 shows the structure of the hot house in elevation, wherein the arched enclosure can be appreciated with the window of the ventilation device open and hinged at the bottom.

Figure 2 shows a detail of the hinged side of the window in the coupling node between bars of the support structure. This same figure shows a detail framed in a circle of a section perpendicular to the axis of the bar supporting the hinged union.

Figure 3 is a detail of the end of the window in a pronounced arc with the means that permit the opening of the window and the pieces that assure the water-tightness of the seal.

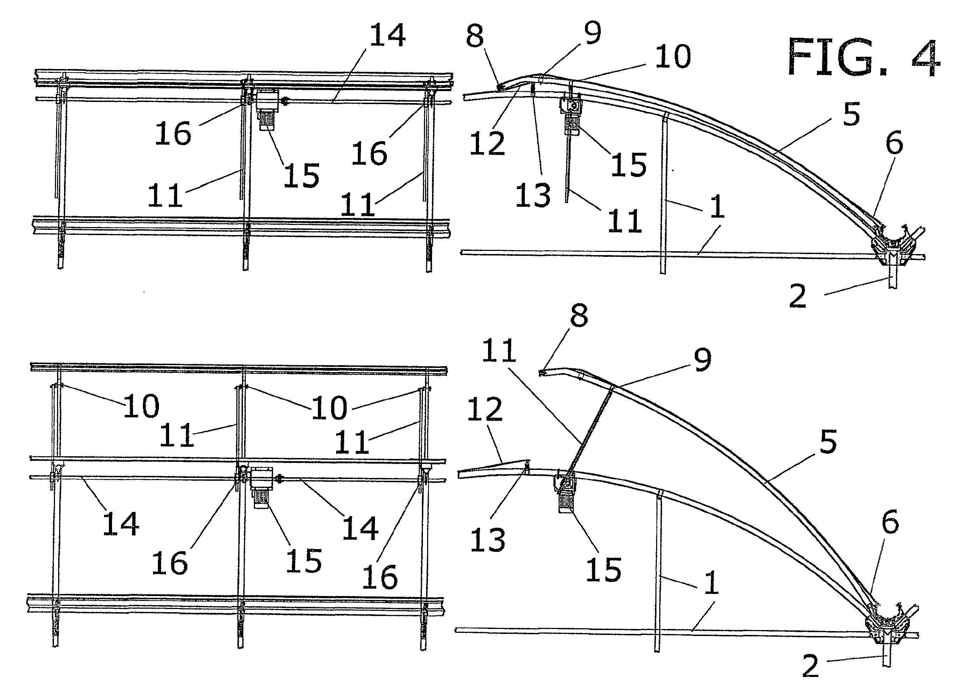

Figure 4 shows two assemblies formed by an elevation and its profile with the window open and the window closed wherein the distribution is shown of the transmission means of the motor torque for opening the ventilation device.

### PREFERRED EMBODIMENT OF THE INVENTION

In the light of the foregoing, the present invention relates to a ventilation device formed by a window of large dimensions with power-assisted opening and which has a special configuration to obviate to a great extent stresses due to wind load.

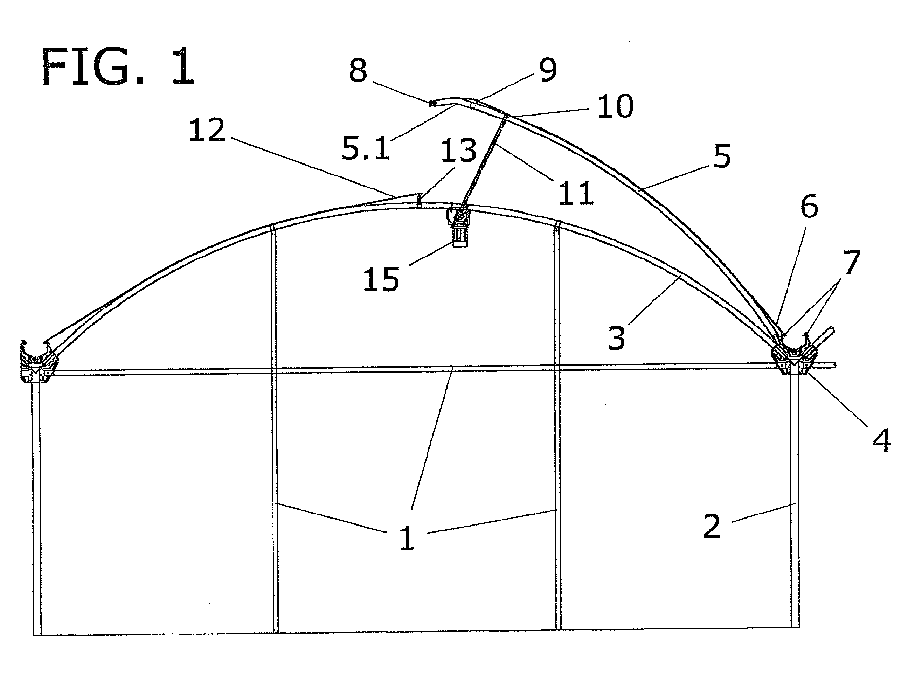

Figure 1 is an elevation of the preferred embodiment of the invention which includes a hot house structure formed by main support pieces (2) and auxiliary vertical and horizontal supports (1) plus arched bars (3) that configure the roof.

The arched bars (3), reinforced with some auxiliary vertical bars {1), join with the main vertical pieces (2) in a coupling node (4) formed by a flange that engages the ends of each bar.

The ventilation device allows the opening of a half arch by means of a window hinged in the coupling node (4) and whose end (8) facing the air current is in the ridge of the enclosure.

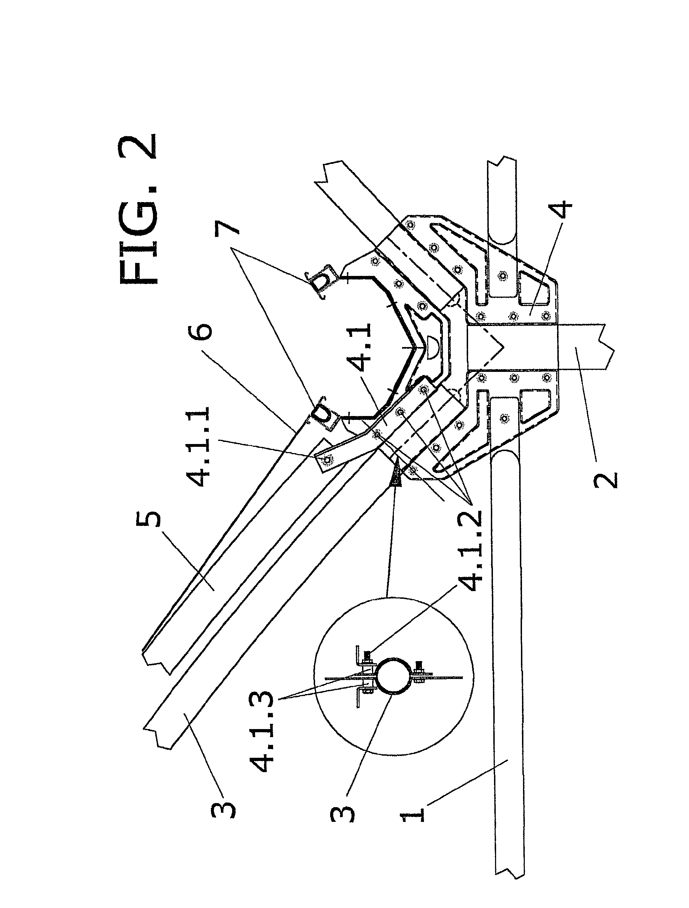

In figure 2 the hinged coupling is appreciated in more detail, located on the end of the arched bar (3) of the structure and formed from two pieces (4.1) in "L" with the arms in opposition and external, joined by means of the same screws (4.1.2) employed in the union of the arched bar (3).

As can be appreciated in the detail section located to the left and enclosed in a circle, the pieces (4.1) in "L" are separated by means of tubular pieces (4.1.3) at a distance equivalent to the width of the window frame (5).

This frame (5) connects at its end (4.1.1) with the end of the assembly of pieces (4.1) in "L", which are bent upwards to assure a certain distance between the piece (3) of the arch and the frame (5) of the window whilst rotation in the hinged area is not impeded.

On the hinged connection there is a piece (7) for securing the end of the plastic sheet (6) that serves as covering for the window maintaining it in tension.

The other end of the window is where the opening facing the air current takes place and where water-tightness must be assured.

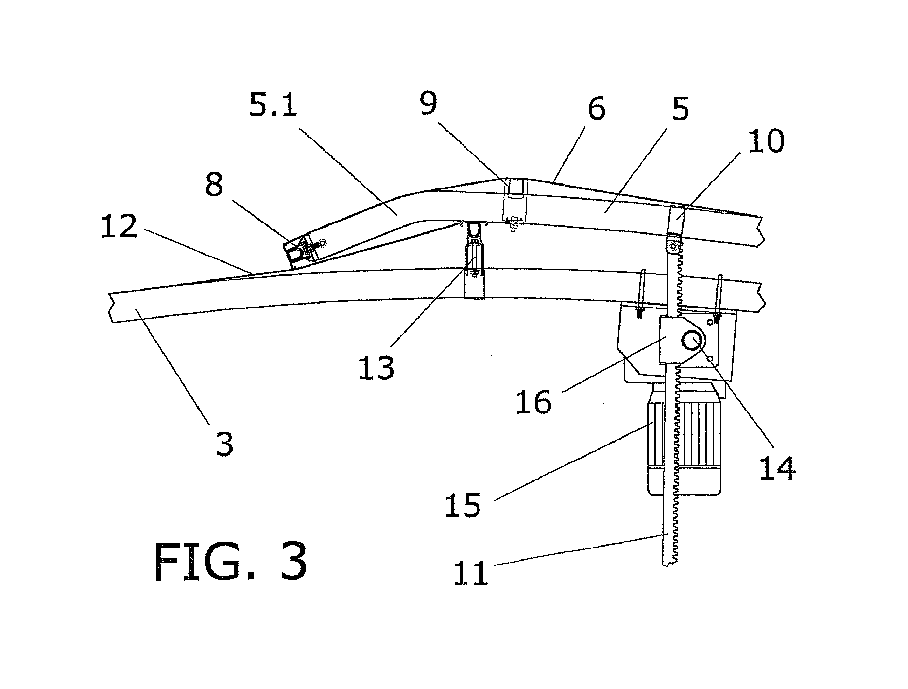

Figure 3 represents in greater detail the sealing of the window, as well as the configuration of its end.

The frame (5) that is hinged at its end, has at the other end a negative dihedron (5 1) that gives rise to a pronounced arc that results in an end pointing downwards.

This pointed end has a piece (8) that maintains the tension in the upper plastic sheet (6) and in turn, the lower edge rests on another sheet (12) tightened by a raised piece (13) located under the pronounced arc (5.1).

This lower sheet (12) under tension establishes a watertight seal that stops water from entering, and since the securing piece (13) is raised, the sheet (12) has a slope that prevents the accidental entrance of water.

The pronounced arc (5.1) defines a surface pointing downwards and facing into the wind that pushes by action thereof downwards favouring the sealing of the window.

This same surface modifies the aerodynamic behaviour of the window when it is open since it continues to point downwards thereby reducing the forces normal to the roof.

Above, a second piece (9) elevates the plastic sheet (6) in order to define two gradients, one toward the hinged side and another toward the seal and therefore toward the other side of the roof.

Near this end of the window there is a support (10) for a rack (11) arranged vertically and not prevented from rotating in its connection intended to raise the window at the same time as it supports it.

The rack (11) is driven by a gear arrangement (16) which in turn is driven by the transmission rod (14) that emerges from the motor-reduction gear unit (15).

The transmission rod (14) allows the use of a motor-reduction gear unit (15) acting on several synchronized racks (11) preventing buckling of the window.

The essential nature of this invention is not altered by variations in materials, form, size and arrangement of the component elements, described in a non-restrictive manner, sufficient for an expert to proceed to its reproduction.

## Claims

1. Ventilation device for hot house, of among the means intended to open and close a window in an arched hot house roof for ventilation essentially **characterised in that** it is configured by means of a window hinged on the side coincident with the coupling nodes (4) by means of flange (4) located between the arches of the roof, and opening at the top facing into the wind; hinge mechanism consisting of two pieces (4.1) in "L" in opposition and with the external legs, separated by means of tubular pieces (4.1.3) and joined by the screws that secure the end of the arched bar (3) of the roof to the flange (4), wherein these pieces (4.1) in "L" are at an angle in order to elevate their end where the union (4.1.1) is hinged with the end of the bar (5) of the window; on the coupling node (4) there is also a piece (7) for fastening and clamping the plastic sheet (6) that covers the window, secured at the other end by another piece (8) which in turn rests in a watertight seal on a sheet (12), tightened and inclined toward the opposite slope of the window by means of a raised piece (13) that is located under the pronounced arc that defines an angle (5.1) of the frame (5) of the window located near the end, and which results in an area in the form of an outer band parallel to the edge with gradient opposite to that of the window; window whose upper surface is peaked above in two slopes by means of a raised piece (9) located on the frame (5) that supports the window; this device also includes a motor-reduction gear unit (15) that drives a transmission rod (14) that runs parallel to the top edge of the window for transmission of the motor torque among a plurality of racks distributed near the window edge and connected by a drive gear arrangement (16) joined to the transmission rod (14).

2. Ventilation device for hot house according to the first claim **characterised in that** the end gradient due to the angle (5.1) of the bar (5) of the window is such that, both in the closed position and in the open position the gradient with respect to horizontal of the end of the window is opposite to the gradient of the window of the hinged side.
